# EUROPÄISCHE PATENTSCHRIFT

(11) **EP 0 999 034 B1**
(45) Veröffentlichungstag und Bekanntmachung des Hinweises auf die Patenterteilung: **04.06.2003**
(21) Anmeldenummer: 99120645.9
(22) Anmeldetag: 18.10.1999
(51) Int. Cl.: B29C 47/90

(54) **Vorrichtung zum Kalibrieren eines extrudierten Kunststoff-Profils**
Apparatus for calibrating extruded plastic profiles
Dispositif de calibrage de profilés en matière plastique extrudés

(30) Priorität: 19.10.1998 DE 29818511 U
(43) Veröffentlichungstag der Anmeldung: 10.05.2000
(73) Patentinhaber: Schwarz Extrusionswerkzeuge GmbH, 82515 Wolfratshausen (DE)
(72) Erfinder: Stock, Lorenz, 82057 Icking (DE)
(74) Vertreter: Secklehner, Günter, Dr.

(56) Entgegenhaltungen:
- DE-U- 29 803 298
- US-A- 4 685 879
- US-A- 5 316 459

## Beschreibung

Die Erfindung betrifft eine Vorrichtung zum Kalibrieren eines extrudierten Kunststoff-Profils, die mindestens einen vorzugsweise flüssigkeitsgekühlten Kalibrator aufweist, wobei der Kalibrator mindestens zwei zusammenwirkende Teile, vorzugsweise ein Oberteil, zwei Seitenteile und ein Unterteil, aufweist, die einen Raum mit Seitenflächen definieren, in dem das zu kalibrierende Kunststoff-Profil mittels eines Vakuums an die Seitenflächen des Raums angesaugt wird.

Kalibriervorrichtungen dieser Gattung sind bekannt. In der **DE 298 03 298 U1** ist eine Kalibriervorrichtung für Kunststoffprofile beschrieben, die aus einem wassergekühlten Kalibrator besteht. An dessen innerer Kontur wird das zu kalibrierende Kunststoffprofil mittels eines Vakuums kalibriert. Unterhalb des Kalibrators ist ein Konsolenprofil angeordnet, das sich über die Länge des Kalibrators bzw. mehrerer Kalibratoren erstreckt, wobei eine durchgehende Wasserkammer und eine durchgehende Vakuumkammer vorgesehen sind. Die Vakuumkammer ist schlauchlos mit der Unterseite des Kalibrators verbindbar. Des weiteren sind Kalibrator-Einrichtungen bekannt, die Schnellwechseleinrichtungen aufweisen, bei denen der Zugang zu den Einzelteilen eines Kalibrators dadurch erleichtert wird, daß einzelne Kalibratorteile verschwenkt werden können.

Diese Kalibriervorrichtungen sind meist auf ortsfesten Quertraversen angeordnet, auf der die Vorrichtung fest verschraubt ist. Dies hat in nachteilhafter Weise zur Folge, daß die Verschieblichkeit der Gesamtanordnung im Rahmen von Umrüst-, Montage- oder Wartungsarbeiten nur schwer möglich ist, was eine entsprechend schwierige Handhabung bedingt.

Weiterhin weisen die vorbekannten Vorrichtungen den Nachteil auf, daß zum Wechseln der Kaliber-Einzelteile, z. B. eines Seitenteils des Kalibrators, die gelösten Einzelteile des Kalibrators schwer zu handhaben bzw. auszutauschen sind. Die Ablage von demontierten Kalibrator-Einzelteilen muß auf einem zusätzlichen Platz erfolgen, was häufig zu Beschädigungen der schweren Teile während des Manövrierens führt.

Der Erfindung liegt daher die **Aufgabe** zugrunde, eine Kalibriervorrichtung der eingangs beschriebenen Art derart weiterzuentwickeln, daß die Handhabung sowohl der gesamten Kalibrieranlage als auch einzelner Teile des Kalibrators in einfacherer Weise als im Stand der Technik möglich ist. Es soll insbesondere möglich sein, Umbaumaßnahmen am Kalibrator zu vollziehen, ohne daß separate Montage- oder Untergestelle notwendig sind. Die Einzelteile des Kalibrators sollen leicht und ohne Gefahr einer Beschädigung zu versetzen sein, so daß Wartungs- und Umrüstarbeiten erleichtert werden. Schließlich soll der Aufwand bei der Verbindung einzelner Kalibratorenteile durch Schläuche reduziert werden.

Die **Lösung** dieser Aufgabe durch die Erfindung ist dadurch gekennzeichnet, daß
- ein Teil des Kalibrators (1, 2, 3, 4), vorzugsweise das Unterteil (4) des Kalibrators (1, 2, 3, 4), mit einem Versorgungsblock (6) verbunden ist,
- wobei der Versorgungsblock (6) Versorgungskanäle (9, 13) für die Versorgung des Kalibrators (1, 2, 3, 4) mit Kühlflüssigkeit (W) und Vakuum (V) aufweist, und
- daß der Versorgungsblock (6) mindestens einen Halter (10) aufweist, der zur Aufnahme mindestens eines Teils (2, 3) des Kalibrators (1, 2, 3, 4), vorzugsweise eines Seitenteils (2, 3), geeignet ist, und
- daß mindestens ein Halter (10) eine scharnierartige Lagerstelle (11) aufweist, in die ein Teil (1) des Kalibrators (1, 2, 3, 4), vorzugsweise das Oberteil (1), eingehakt und um diese Lagerstelle (11) geschwenkt werden kann.

Zwecks leichterer Demontage einzelner Kalibratorteile ist fortbildungsgemäß vorgesehen, daß der Versorgungsblock (6) mindestens einen Halter (10) aufweist, der zur Aufnahme mindestens eines Teils (2, 3) des Kalibrators (1, 2, 3, 4), vorzugsweise eines Seitenteils (2, 3), geeignet ist. Hierbei ist insbesondere vorgesehen, daß mindestens ein Halter (10) eine scharnierartige Lagerstelle (11) aufweist, in die ein Teil (1) des Kalibrators (1, 2, 3, 4), vorzugsweise das Oberteil (1), eingehakt und um diese Lagerstelle (11) geschwenkt werden kann. Erleichtert wird die Verschwenkung dadurch, daß die scharnierartige Lagerstelle (11) als Langlochaufnahme ausgebildet ist. Eine einseitige Öffnung in dieser Lagerstelle (11) ermöglicht das Ein- und Aushaken in beliebig geschwenkter Stellung. Außerdem ist der Aufwand an Verschlauchung reduziert, weil die Medienversorgung direkt durch den Versorgungsblock erfolgen kann.

Damit eine einfache Verschiebung des Versorgungsblocks und die Lageanpassung des Versorgungsblocks an neue Bedingungen einfach ermöglicht werden kann ist der Versorgungsblock (6) auf einem Montagebock (7) mittels mindestens einem lösbaren Befestigungselement (8) befestigt.

Eine gute Verbindung der einzelnen Kalibratorteile wird dadurch erreicht, daß die einzelnen Teile (1, 2, 3, 4) des Kalibrators durch formschlüssige Verbindungselemente (12), vorzugsweise über Nut-Feder-Verbindungen, zueinander fixiert werden.

Vorteilhafterweise ist weiterhin vorgesehen, daß mindestens ein Versorgungskanal (9) des Versorgungsblocks (6), vorzugsweise das für die Kühlflüssigkeit (W), als Sackloch ausgeführt ist Die Versorgung mit Vakuum kann auch so erfolgen, daß sich der Versorgungskanal (13) im Versorgungsblock (6) für das Vakuum (V) an der Oberfläche (14) des Versorgungsblocks (6) befindet und schalenartig ausgebildet ist.

Die Versorgung des Oberteils (1) und der Seitenteile (2, 3) des Kalibrators (1, 2, 3, 4) mit Kühlflüssigkeit (W) und/oder Vakuum (V) von dem Versorgungsblock (6) aus kann fortbildungsgemäß mittels Schläuchen erfolgt. Dann kann weiter vorgesehen werden, daß der Versorgungsblock (6) nur eine Zuleitung (15) für Kühlmittel (W) aufweist.

Schließlich ist angedacht, daß der Versorgungsblock (6) nur einen zentralen Ausgang (16) für Vakuum (V) aufweist.

Die erfindungsgemäße Ausgestaltung hat insbesondere folgende Vorteile zur Folge:
- Die Kalibriervorrichtung hat eine kompakte Blockbauform mit integrierten Kühl- und Vakuumkanälen, die vorzugsweise nicht durchgängig sind (es kann ein Sachloch für die Wasserversorgung vorgesehen sein).
- Die Versorgung mit Medien erfolgt zentral über einen Hauptanschluß, die Weiterverteilung erfolgt vom Versorgungsblock aus.
- Die Seitenteile des Kalibrators können durch die entsprechenden Halter lediglich durch seitliches Versetzen bzw. durch Verschwenken leicht gelagert werden.
- Es ist kein Versetzen der Montageböcke erforderlich, um Kalibratoren auf ihren Versorgungsblöcken zu montieren; es ist vielmehr möglich, sie an beliebiger Stelle durch Spannpratzen zu befestigen.
- Jeder Kalibrator hat einen separat steuerbaren Kühlkreislauf sowie einen separat steuerbaren Vakuumkreislauf, wodurch ein Abdichten zwischen den Kalibrierungsteilen entbehrlich wird.
- Der Kühlwasserfluß ist auch während der Produktion gut kontrollierbar.

In der Zeichnung ist ein erfindungsgemäßes Ausführungbeispiel dargestellt.
- Fig. 1: zeigt eine perspektivische Ansicht einer schematisch dargestellten Kalibriervorrichtung mit Versorgungsblock und Montageböcken, in
- Fig. 2: ist schematisch die Seitenansicht der Kalibriervorrichtung zu sehen,
- Fig. 3: stellt schematisch die Versorgungsleitungen im Versorgungsblock und im Kalibrator dar.

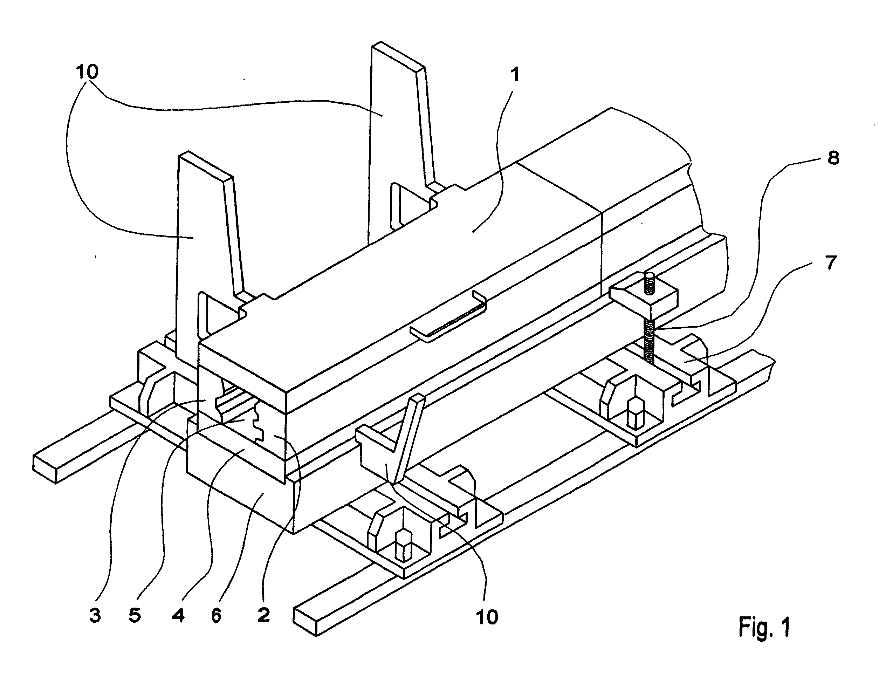

In Fig. 1 is ein Kalibrator 1, 2, 3, 4 zu sehen, der ein Oberteil 1, zwei Seitenteile 2 und 3 sowie ein Unterteil 4 aufweist. Die Teile 1, 2, 3, 4 des Kalibrators schließen einen Raum 5 ein, durch den das - nicht gezeichnete - zu kalibrierende Kunststoffprofil geführt wird. Dabei wird es von einem Vakuum an die Seitenflächen des Raums 5 angesaugt und dadurch kalibriert.

Das Unterteil 4 des Kalibrators ist auf einem Versorgungsblock 6 angeordnet. Der Versorgungsblock versorgt den Kalibrator 1, 2, 3,4 mit Vakuum und Kühlwasser und ist seinerseits auf einem Montagebock 7 mittels Spannpratzen 8 lösbar befestigt (dargestellt sind Hammerschrauben, die in übliche Nuten im Montagebock 7 eingreifen). Über die dargestellten Nuten ist die Kalibriervorrichtung also mit den Spannzangen 8, von denen nur eine dargestellt ist, am Montagebock 7 befestigt. Dies hat den Vorteil, daß die Montageböcke 7 nicht versetzt zu werden brauchen, wenn die Kalibriervorrichtung verschiedene Position einnehmen soll, wie dies bei den bekannten Vorrichtungen, die mit fest montierten Querträgern ausgerüstet sind, der Fall ist.

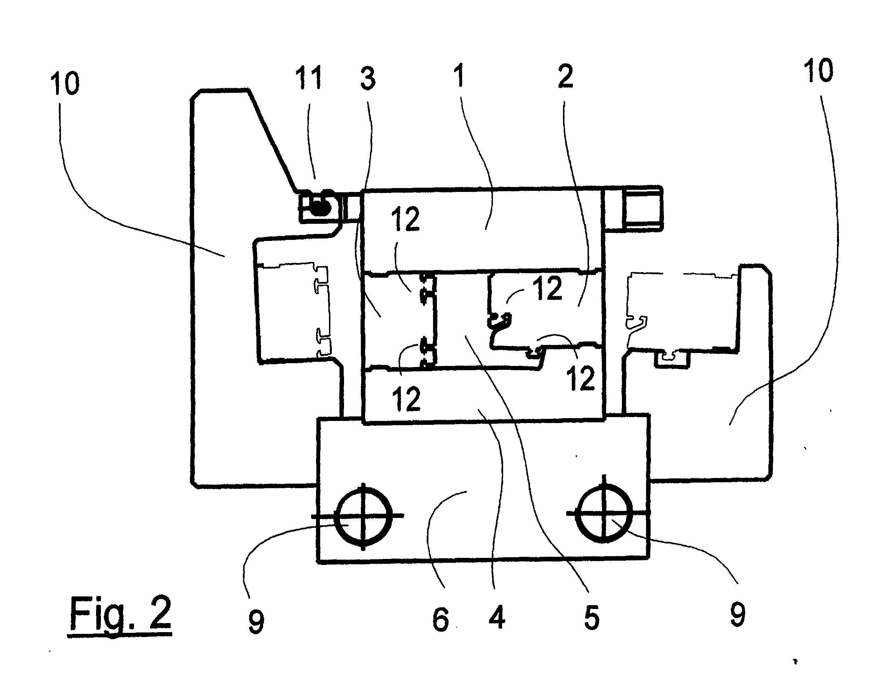

Am Versorgungsblock sind weiterhin Halter 10 angeordnet, deren Funktion aus Fig. 2 deutlich wird.

In dieser Figur sind die Seitenteile 2, 3 des Kalibrators 1, 2, 3, 4 nämlich einmal mit ausgezogenen Linien in der montierten Position gezeichnet und einmal mit gestrichelten Linien in der demontierten Position. Wie zu erkennen ist, können die Seitenteile 2 und 3 zwecks Demontage des Kalibrators 1, 2, 3, 4 seitlich auf die Halter 10 verschoben werden, so daß sie ohne weiten Transportweg aus dem Kalibrierbereich entfernt sind.

Der links dargestellte Halter 10 weist des weiteren eine scharnierartige Lagerstelle 11 auf - vorzugsweise als Langlochaufnahme ausgeführt -, in die ein Fortsatz des Kalibrator-Oberteils 1 eingreifen kann. Dadurch wird es möglich, das Oberteil 1 (gegen den Uhrzeigersinn) aus dem Kalibrierbereich zu verschwenken, wobei die Lagerstelle 11 als Drehpunkt dient. Nach dem Aufklappen des Oberteiles 1, das an dem oberen Abschnitt des Halters 10 zur Anlage kommt und über die scharnierartige Verbindung 11 gegen Herausfallen gesichert ist, wird die Nut- und Federverbindung 12 der Seitenteile 2 und 3 mit dem Oberteil 1 freigegeben und die Seitenteile 2 und/oder 3 können in die Aussparungen der Halter 10 abgelegt werden. Dies kann beispielsweise für Wartungsarbeiten erforderlich sein. Die Verbindung zwischen den Seitenteilen 2, 3 und dem Unterteil 4 ist ebenfalls als Nut- und Federverbindung 12 ausgeführt. Um die Seitenteile 2, 3 vor Beschädigung zu schützen, können die Halter 10 teilweise oder ganz mit einem weichen Material, beispielsweise Weich-PVC, überzogen sein.

Damit der Kalibrator bzw. seine Einzelteile 1, 2, 3, 4 sich in der Kalibrierposition in exakter Position zueinander befinden, sind Nut-Feder-Verbindungen 12 zwischen den Teilen 1,2,3,4 vorgesehen.

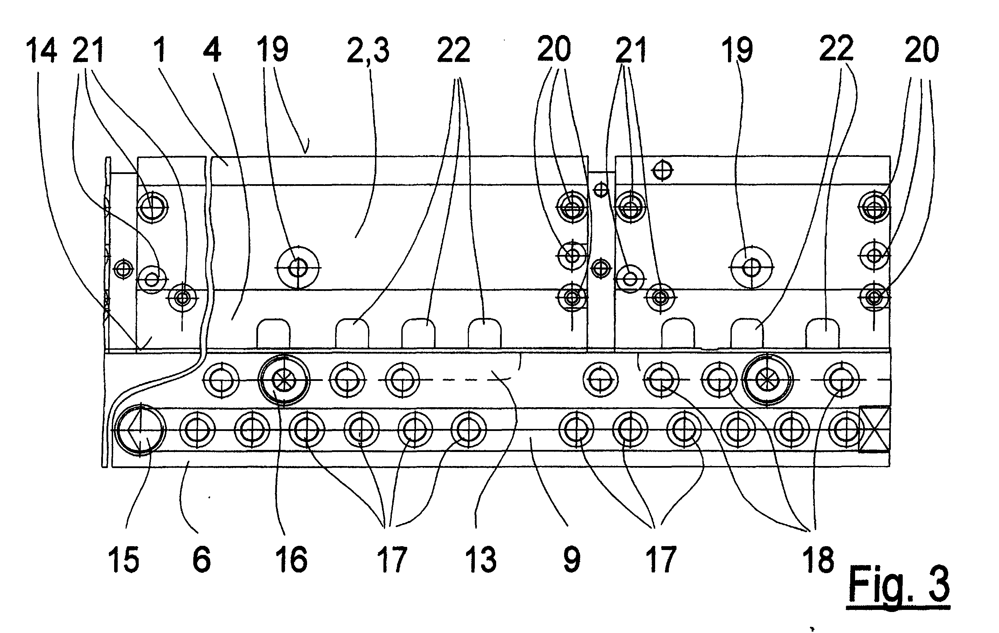

Die Versorgung des Kalibrators mit Medien erfolgt durch die Bohrungen 9 im Versorgungsblock. Einzelheiten hierzu zeigt Fig. 3.

Diese Figur zeigt die gesamte Versorgung der Kalibriervorrichtung. Der Versorgungsblock 6 weist eine Bohrung für das Kühlmedium, vorzugsweise Wasser W, auf, die als Sackloch 9 ausgeführt ist. Diese Bohrung 9 ist mit einer Querbohrung für die zentrale Einspeisung 15 des Kühlmediums versehen, eine oder mehrere kleinere Querbohrungen 17 bilden die Versorgungsanschlüsse für die einzelnen Kalibratorteile. Die Oberseite 14 des Versorgungsblockes 6 hat eine schalen- bzw. taschenartige Kammer 13, einen zentralen Anschluß für das Vakuum 16 und kleinere Versorgungsbohrungen 18 für die Verbindung zu den einzelnen Kalibratorteilen. Das Kalibratorunterteil 4 weist direkte Verbindungsbohrungen 22 zu der Vakuumkammer 13 im Versorgungsblock 6 auf.

Weiterhin ist in diesem Unterteil 4 ein Eingang 20 für das Kühlmedium, der über einen - nicht dargestellten - Schlauch mit Schnellkupplungen mit einem der Ausgänge 17 des Versorgungsblockes 6 verbindbar ist, und ein Ausgang 21 zu sehen, der wiederum mit einem nächsten Eingang 20 eines weiteren Kalibrators verbunden werden kann. Alternativ - dieser Fall ist jedoch nicht dargestellt, kann das ausströmende Kühlmittel (Wasser) zur Entsorgung oder Wiederaufbereitung in einen Auffangbehälter aufgefangen werden.

Es ist hierbei insbesondere zu sehen, daß mehrere Kalibratoren nebeneinander angeordnet sind (der rechte ist nur abgebrochen dargestellt), wobei jeder Kalibrator seine eigene Medienversorgung aufweist; die gesamte Kalibrierstrecke besteht also aus einer Reihenschaltung mehrerer Kalibratoren.

Die Seitenteile 2, 3 und das Oberteil 1 des Kalibrators 1, 2, 3, 4 sind in ähnlicher Weise aufgebaut. Die jeweilige Kühlmittelbohrung 20 sowie der jeweilige Ausgang 19 für das Vakuum ist ebenfalls mittels - nicht dargestellten - Schläuchen mit dem zentralen Versorgungsblock 6 verbindbar.

### Bezugszeichenliste:

- 1: Oberteil des Kalibrators
- 2, 3: Seitenteile des Kalibrators
- 4: Unterteil des Kalibrators
- 1,2,3,4: Kalibrator
- 5: Kalibrierraum
- 6: Versorgungsblock
- 7: Montagebock
- 8: lösbare Befestigungselemente
- 9: Ver-/Entsorgungskanäle für Wasser
- 10: Halter
- 11: scharnierartige Lagerstelle
- 12: formschlüssige Verbindungselemente (Nut-Feder-Verbindungen)
- 13: Zentraler Versorgungskanal für Vakuum
- 14: Oberfläche des Versorgungsblocks
- 15: Zentraler Eingang für Wasser
- 16: Zentraler Ausgang für Vakuum
- 17: Versorgungsausgänge für Wasser
- 18: Versorgungseingänge für Vakuum
- 19: Einzelausgänge für Vakuum
- 20: Einzeleingänge für Wasser
- 21: Einzelausgänge für Wasser
- 22: direkte Verbindungskanäle von der Vakuumkammer 13 zum Unterteil 4 des Kalibrators

- V: Vakuum
- W: Wasser

## Patentansprüche

1. Vorrichtung zum Kalibrieren eines extrudierten Kunststoff-Profils, die mindestens einen vorzugsweise flüssigkeitsgekühlten Kalibrator (1, 2, 3, 4) aufweist, wobei der Kalibrator (1, 2, 3, 4) mindestens zwei zusammenwirkende Teile (1, 2, 3, 4), vorzugsweise ein Oberteil (1), zwei Seitenteile (2, 3) und ein Unterteil (4), aufweist, die einen Raum (5) mit Seitenflächen definieren, in dem das zu kalibrierende Kunststoff-Profil mittels eines Vakuums (V) an die Seitenflächen des Raums (5) angesaugt wird,
**dadurch gekennzeichnet, daß**
ein Teil des Kalibrators (1, 2, 3, 4), vorzugsweise das Unterteil (4) des Kalibrators (1, 2, 3, 4), mit einem Versorgungsblock (6) verbunden ist, wobei der Versorgungsblock (6) Versorgungskanäle (9, 13) für die Versorgung des Kalibrators (1,2,3,4) mit Kühlflüssigkeit (W) und Vakuum (V) aufweist, und
daß der Versorgungsblock (6) mindestens einen Halter (10) aufweist, der zur Aufnahme mindestens eines Teils (2, 3) des Kalibrators (1, 2, 3, 4), vorzugsweise eines Seitenteils (2, 3), geeignet ist, und
daß mindestens ein Halter (10) eine scharnierartige Lagerstelle (11) aufweist, in die ein Teil (1) des Kalibrators (1, 2, 3, 4), vorzugsweise das Oberteil (1), eingehakt und um diese Lagerstelle (11) geschwenkt werden kann.

2. Vorrichtung nach Anspruch 1, **dadurch gekennzeichnet, daß** die scharnierartige Lagerstelle (11) als Langlochaufnahme ausgebildet ist.

3. Vorrichtung nach Anspruch 2, **dadurch gekennzeichnet, daß** die schanierartige Lagerstelle (11) einseitig geöffnet ist, so daß das Teil (1) eingehakt und ausgehakt werden kann.

4. Vorrichtung nach Anspruch 1 bis 3, **dadurch gekennzeichnet, daß** der Versorgungsblock (6) auf einem Montagebock (7) mittels mindestens einem lösbaren Befestigungselement (8) befestigt ist.

5. Vorrichtung nach einem der Ansprüche 1 bis 4, **dadurch gekennzeichnet, daß** die einzelnen Teile (1, 2, 3, 4) des Kalibrators durch formschlüssige Verbindungselemente (12), vorzugsweise über Nut-Feder-Verbindungen, zueinander fixiert werden.

6. Vorrichtung nach einem der Ansprüche 1 bis 5, **dadurch gekennzeichnet, daß** mindestens ein Versorgungskanal (9) des Versorgungsblocks (6), vorzugsweise das für die Kühlflüssigkeit (W), als Sackloch ausgeführt ist.

7. Vorrichtung nach einem der Ansprüche 1 bis 6, **dadurch gekennzeichnet, daß** sich der Versorgungskanal (13) im Versorgungsblock (6) für das Vakuum (V) an der Oberfläche (14) des Versorgungsblocks (6) befindet und schalenartig ausgebildet ist.

8. Vorrichtung nach einem der Ansprüche 1 bis 7, **dadurch gekennzeichnet, daß** die Versorgung des Oberteils (1) und der Seitenteile (2, 3) des Kalibrators (1, 2, 3, 4) mit Kühlflüssigkeit (W) und/oder Vakuum (V) von dem Versorgungsblock (6) aus mittels Schläuchen erfolgt.

9. Vorrichtung nach einem der Ansprüche 1 bis 8, **dadurch gekennzeichnet, daß** der Versorgungsblock (6) nur eine Zuleitung (15) für Kühlmittel (W) aufweist.

10. Vorrichtung nach einem der Ansprüche 1 bis 9, **dadurch gekennzeichnet, daß** der Versorgungsblock (6) nur einen zentralen Ausgang (16) für Vakuum (V) aufweist.

11. Vorrichtung nach einem der Ansprüche 1 bis 10, **dadurch gekennzeichnet, daß** mehrere Kalibratoren (1, 2, 3, 4) in Reihe angeordnet sind, wobei mindestens zwei Kalibratoren (1, 2, 3, 4) mittels Schläuchen zur Förderung der Kühlflüssigkeit (W) verbunden sind.

12. Vorrichtung nach einem der Ansprüche 1 bis 11, **dadurch gekennzeichnet, daß** mehrere Kalibratoren (1, 2, 3, 4) in Reihe angeordnet sind, wobei mindestens zwei Kalibratoren (1, 2, 3, 4) mittels Schläuchen zum Ansaugen des Vakuums (V) verbunden sind.

## Claims

1. Apparatus for calibrating extruded plastic profiles, having at least one, preferably liquid-cooled, calibrator (1, 2, 3, 4), the calibrator (1, 2, 3,4) having at least two cooperating parts (1, 2, 3, 4), preferably a top part (1), two side parts (2, 3) and a bottom part (4) defining a chamber (5) with side faces, wherein the plastic profile to be calibrated is sucked against the side faces of the chamber (5) by means of a vacuum (V),
**characterised in that**
one part of the calibrator (1, 2, 3, 4), preferably the bottom part (4) of the calibrator (1, 2, 3, 4), is connected to a supply block (6), the supply block (6) having supply passages (9, 13) for supplying the calibrator (1, 2, 3, 4) with liquid coolant (W) and vacuum (V), and
the supply block (6) has at least one holder (10), which is designed to receive at least one part (2, 3) of the calibrator (1, 2, 3, 4), preferably a side part (2, 3), and
at least one holder (10) has a hinge-type bearing point (11), into which a part (1) of the calibrator (1, 2, 3, 4) is hooked, preferably the top part (1), and can be pivoted about this bearing point (11).

2. Apparatus as claimed in claim 1, **characterised in that** the hinge-type bearing point (11) is provided in the form of a slotted seating.

3. Apparatus as claimed in claim 2, **characterised in that** the hinge-type bearing point (11) is open at one side so that the part (1) can be hooked in and unhooked.

4. Apparatus as claimed in claim 1 to 3, **characterised in that** the supply block (6) is secured to a mounting stand (7) by means of at least one releasable fixing element (8).

5. Apparatus as claimed in one of claims 1 to 4, **characterised in that** the individual parts (1, 2, 3, 4) of the calibrator are fixed to one another by positive-fit connecting elements (12), preferably by means of groove-spring connections.

6. Apparatus as claimed in one of claims 1 to 5, **characterised in that** at least one supply passage (9) of the supply block (6), preferably that for the liquid coolant (W) is a blind bore.

7. Apparatus as claimed in one of claims 1 to 6, **characterised in that** the supply passage (13) in the supply block (6) for the vacuum (V) is disposed on the surface (14) of the supply block (6) and is of a shell-type design.

8. Apparatus as claimed in one of claims 1 to 7, **characterised in that** the top part (1) and the side parts (2, 3) of the calibrator (1,2,3,4) are supplied with liquid coolant (W) and/or vacuum (V) by means of hoses from the supply block (6).

9. Apparatus as claimed in one of claims 1 to 8, **characterised in that** the supply block (6) has only one delivery line (15) for coolant (W).

10. Apparatus as claimed in one of claims 1 to 9, **characterised in that** the supply block (6) has only one central outlet (16) for vacuum (V).

11. Apparatus as claimed in one of claims 1 to 10, **characterised in that** several calibrators (1, 2, 3, 4) are arranged in a row and at least two calibrators (1, 2, 3, 4) are connected by means of hoses to the delivery of liquid coolant (W).

12. Apparatus as claimed in one of claims 1 to 11, **characterised in that** several calibrators (1, 2, 3, 4) are arranged in a row, and at least two calibrators (1, 2, 3, 4) are connected by hoses to the suction of the vacuum (V).

## Revendications

1. Dispositif de calibrage d'un profilé en matière plastique extrudé qui présente au moins un organe de calibrage (1, 2, 3, 4) refroidi de préférence par du liquide, où l'organe de calibrage (1, 2, 3, 4) présente au moins deux parties coopérantes (1 2, 3, 4), de préférence une partie supérieure (1), deux parties latérales (2, 3) et une partie inférieure (4) qui définissent un espace (5) avec des faces latérales dans lequel est aspiré le profilé en matière plastique à calibrer au moyen d'un vide (V) aux faces latérales de l'espace (5),
**caractérisé**
**en ce qu'**une partie de l'organe de calibrage (1, 2,3,4), de préférence la partie inférieure (4) de l'organe de calibrage (1, 2, 3, 4), est reliée à un bloc d'alimentation (6), où le bloc d'alimentation (6) présente des canaux d'alimentation (9, 13) pour alimenter l'organe de calibrage (1, 2, 3, 4) en liquide de refroidissement (W), et un vide (V), et
**en ce que** le bloc d'alimentation (6) présente au moins un organe de retenue (10) qui convient pour recevoir au moins une partie (2, 3) de l'organe de calibrage (1, 2, 3,4), de préférence d'une partie latérale (2, 3) et
**en ce qu'**au moins un organe de retenue (10) présente un emplacement de palier (11) semblable à une charnière dans lequel est accrochée une partie (1) de l'organe de calibrage (1, 2, 3, 4), de préférence la partie supérieure (1) et peut être amenée à pivoter autour de cet emplacement de palier (11).

2. Dispositif selon la revendication 1, **caractérisé en ce que** l'emplacement de palier (11) semblable à une charnière est réalisé comme logement à trou oblong.

3. Dispositif selon la revendication 2, **caractérisé en ce que** l'emplacement de palier (11) semblable à une charnière est ouvert d'un côté de telle sorte que la partie (1) peut être accrochée et décrochée.

4. Dispositif selon la revendication 1 à 3, **caractérisé en ce que** le bloc d'alimentation (6) est fixé sur un support de montage (7) par au moins un élément de fixation amovible (8).

5. Dispositif selon l'une des revendications 1 à 4, **caractérisé en ce que** les parties individuelles (1, 2, 3,4) de l'organe de calibrage sont fixées les unes relativement aux autres par des éléments de liaison à concordance des formes (12), de préférence par des liaisons à languette et rainure.

6. Dispositif selon l'une des revendications 1 à 5, **caractérisé en ce qu'**au moins un canal d'alimentation (9) du bloc d'alimentation (6), de préférence celui pour le liquide de refroidissement (W), est réalisé comme trou borgne.

7. Dispositif selon l'une des revendications 1 à 6, **caractérisé en ce que** le canal d'alimentation (13) dans le bloc d'alimentation (6) pour le vide (V) se trouve à la surface (14) du bloc d'alimentation (6) et est réalisé en forme de coupelle.

8. Dispositif selon l'une des revendications 1 à 7, **caractérisé en ce que** l'alimentation de la partie supérieure (1) et des parties latérales (2, 3) de l'organe de calibrage (1, 2, 3, 4) en liquide de refroidissement (W) et/ou en vide (V) a lieu au moyen de tuyaux à partir du bloc d'alimentation (6).

9. Dispositif selon l'une des revendications 1 à 8, **caractérisé en ce que** le bloc d'alimentation (6) présente un conduit d'amenée (15) pour le moyen de refroidissement (W).

10. Dispositif selon l'une des revendications 1 à 9, **caractérisé en ce que** le bloc d'alimentation (6) présente seulement une sortie centrale (16) pour le vide (V).

11. Dispositif selon l'une des revendications 1 à 10, **caractérisé en ce que** plusieurs organes de calibrage (1, 2, 3, 4) sont disposés en une rangée, où au moins deux organes de calibrage (1, 2, 3, 4) sont reliés par des tuyaux pour le convoyage du liquide de refroidissement (W).

12. Dispositif selon l'une des revendications 1 à 11, **caractérisé en ce que** plusieurs organes de calibrage (1, 2, 3, 4) sont disposés en une rangée, où au moins deux organes de calibrage (1, 2, 3, 4) sont reliés par des tuyaux pour l'aspiration du vide (V).
